Europäisches Patentamt

European Patent Office

Office européen des brevets

(11) Veröffentlichungsnummer: **0 295 422**
**A2**

## EUROPÄISCHE PATENTANMELDUNG

(21) Anmeldenummer: **88107471.0**

(22) Anmeldetag: **10.05.88**

(51) Int. Cl.⁴: **C08G 18/66 , C08G 18/42 , C09J 3/16 , C08G 18/08 , C08G 18/76**

(30) Priorität: **21.05.87 DE 3717070**

(43) Veröffentlichungstag der Anmeldung:
**21.12.88 Patentblatt 88/51**

(84) Benannte Vertragsstaaten:
**BE DE ES FR GB IT**

(71) Anmelder: **BAYER AG**
**Konzernverwaltung RP Patentabteilung**
**D-5090 Leverkusen 1 Bayerwerk(DE)**

(72) Erfinder: **Müller-Albrecht, Horst, Dr.**
**Roggendorfstrasse 59**
**D-5000 Köln 80(DE)**
Erfinder: **Meckel, Walter, Dr.**
**Zonser Strasse 9**
**D-4040 Neuss(DE)**
Erfinder: **Dollhausen, Manfred, Dr.**
**Herzogenfeld 21**
**D-5068 Odenthal(DE)**

(54) **Polyesterpolyurethane und deren Verwendung als Klebstoff.**

(57) Kleber mit verbesserter Verarbeitbarkeit sind endständige Hydroxylgruppen aufweisende Polyesterpolyurethane erhältlich durch Umsetzung von

a) speziellen Polyesterdiolen eines zwischen 1.000 und 3.900 liegenden Molekulargewichtes

b) mindestens einem Glykol des Molekulargewichtes 62 bis 600 und

c) mindestens einem organischen Diisocyanat.

EP 0 295 422 A2

## Polyesterpolyurethane und deren Verwendung als Klebstoff

Die Erfindung betrifft neue, insbesondere weitgehend lineare, endständige Hydroxylgruppen aufweisende Polyesterpolyurethane auf Basis von ausgewählten Ausgangsmaterialien und ihre Verwendung als Klebstoffe bzw. zur Herstellung von Klebstoffen.

Die Verwendung von weitgehend linearen, endständigen Hydroxylgruppen aufweisenden Polyesterpolyurethanen als Klebstoffe zum Verkleben der verschiedensten Werkstoffe, wie weichmacherhaltigen PVC-, Natur- und Synthesekautschuktypen mit sich selbst und anderen Materialien ist bekannt und beispielsweise in der DE-PS 1 256 822 oder DE-PS 1 930 336 beschrieben.

Diese, auf Basis kristalliner Dihydroxypolyester eines im allgemeinen zwischen 800 und 4.000 liegenden Molekulargewichts, gegebenenfalls niedermolekularen Kettenverlängerungsmitteln und Diisocyanaten aufgebauten Dihydroxylpolyesterpolyurethane erfüllen jedoch, trotz breiten Einsatzes in der Klebstoffindustrie noch nicht alle Anforderungen moderner Fügetechnik.

So erfordern modisches Schuhdesign und rationelle Fertigung beispielsweise, daß die aus Lösung auf die zu klebenden Substrate aufgetragenen Klebstoffschichten genügend lange klebrig bleiben, damit die Verbunde sich auch noch nach einer längeren Zeit dauerhaft verbinden lassen. Für eine problemlose Fertigung ist es nun von entscheidender Bedeutung, daß diese Kontaktklebrigkeit, ohne zusätzliche Wärmeaktivierung, nach dem Klebstoffauftrag für einen ausreichend langen Zeitraum bestehen bleibt, und so eine optimale Verarbeitungssicherheit gewährleistet ist.

Auch durch die Mitverwendung von in der Klebstoffindustrie üblichen Harzen läßt sich bei Kontaktklebrigkeit nach Klebstoffauftrag verlängern, was aber zu einer Einbuße an den spezifischen Polyurethaneigenschaften führt, die für viele Anwendungen unbedingt erwünscht sind. Aus der EP-A-0 192 946 sind bereits weitgehend lineare Polyesterpolyurethane bekannt, die durch Umsetzung von Polyesterdiolen des Molekulargewichtsbereiches 4.000 bis 6.000 erhalten werden. Diese Polyesterpolyurethane weisen verbesserte Kontaktklebzeiten nach der Wärmeaktivierung und Anfangs- und Endfestigkeiten der Verklebungen auf.

Angesichts der gestiegenen Erfordernisse lag der Erfindung die Aufgabe zugrunde, neue Klebstoffe auf Basis von Polyesterpolyurethanen zur Verfügung zu stellen, die die Forderungen der Praxis bezüglich ausreichend langer Kontaktklebrigkeit ohne Wärmeaktivierung nach dem Klebstoffauftrag, und damit der Gewährleistung einer hohen Verarbeitungssicherheit, und hoher Anfangs- und Endfestigkeit und Wärmefestigkeit der Verklebung weitgehend befriedigen.

Gegenstand der Erfindung sind endständige Hydroxylgruppen aufweisende Polyesterpolyurethane, erhältlich durch Umsetzung von

a) Polyesterdiolen eines zwischen 1.000 und 3.900, vorzugsweise 1.500 bis 3.000, liegenden Molekulargewichtes

b) mindestens einem Glykol des Molekulargewichtes 62 bis 600 als Kettenverlängerungsmittel und

c) mindestens einem organischen Diisocyanats unter Einhaltung eines Äquivalent-Verhältnisses von Hydroxylgruppen in a) und b) zu Isocyanatgruppen c) von 1:0,9 bis 1:0,999, dadurch gekennzeichnet, daß die Komponente a) zumindestens 80 Gew.-% aus Polyesterdiolen auf Basis von

i) Dicarbonsäuren mit mindestens 6 C-Atomen, vorzugsweise Adipinsäure und mindestens 2 Diolen des Molekulargewichtes 62 bis 600, vorzugsweise Hexandiol-1,6 und Butandiol-1,4, wobei der Anteil jeder Diolkomponente wenigstens 20 Mol-%, vorzugsweise wenigstens 30 Mol-%, beträgt und/oder

ii) Mischkondensationsprodukten von

p) Dicarbonsäuren mit mindestens 6 C-Atomen, vorzugsweise Adipinsäure, mit mindestens einem Diol des Molekulargewichtes 62 bis 600, vorzugsweise Butandiol-1,4 und/oder Hexandiol-1,6, mit

q) Hydroxycarbonsäuren, mit mindestens 6 C-Atomen, bzw. den hieraus durch Wasserabspaltung resultierenden Lactonen, vorzugsweise $\omega$-Hydroxycapronsäure bzw. $\varepsilon$-Caprolacton, in einem molaren Verhältnis der Komponente p:q von 3:1 zu 1:3, vorzugsweise 2:1 zu 1:2.

Die Herstellung dieser Polyesterdiole erfolgt in an sich bekannter Weise durch Umsetzung der Diole mit Carbonsäuren, bzw. Hydroxycarbonsäuren oder den daraus abgeleiteten Lactonen bei 100 bis 220°C bei der Säurezahl des Reaktionsgemisches unter 2 abgefallen ist.

Neben den erfindungswesentlichen Polyesterdiolen kann die Komponente a) bis zu 20 Gew.-% an anderen, ein vorzugsweise über 600 liegendes, aus der Hydroxylzahl berechenbares Molekulargewicht aufweisenden Polyesterdiolen aufweisen. Im allgemeinen weisen diese, gegebenenfalls mitzuverwendenden Polyesterdiole ein zwischen 1.000 und 3.900 liegendes Molekulargewicht auf. Vorzugsweise handelt es sich bei diesen Polyesterdiolen um Produkte mit einem Molekulargewicht von 1.500 bis 3.000.

Bei den unter b) angegebenen Kettenverlängerungsmitteln handelt es sich um endständige Hydroxylgruppen aufweisende Alkandiole mit 2 bis 8, vorzugsweise 2 bis 6 und insbesondere 4 bis 6 Kohlenstoffatomen, wie z.B. 1,2-Dihydroxyethan, 1,3-Dihydroxypropan, 1,4-Dihydroxybutan, 1,5-Dihydroxypentan, 1,6-Dihydroxyhexan oder beliebige Gemische deratiger Diole. Außer diesen bevorzugten Kettenverlängerungsmitteln kommen jedoch auch Esterdiole des genannten Molekulargewichtsbereiches, wie z.B. Terephthalsäure-bis-2-hydroxyethylester, Etherdiole des genannten Molekulargewichtsbereiches, wie z.B. 4,4'-Bis(2-hydroxyethoxy)-diphenolpropan-2,2 oder auch carboxylgruppenhaltige Diole, wie Dimethylolpropionsäure und/oder sulfonatgruppenhaltige Diole, wie beispielsweise propoxylierte Addukte von Natriumhydrogensulfit an 1,4-Dihydroxy-but-2-en und/oder quaternäre Ammoniumgruppen enthaltende Diole des genannten Molekulargewichtsbereiches in Betracht. Beispiele für geeignete carboxylgruppenhaltige oder ionisch modifizierte Diole der genannten Art können der DE-OS 2 734 102 entnommen werden.

Die Komponente b) wird in einer Menge von bis zu 200, vorzugsweise bis zu 100 und vorzugsweise bis zu 70 Hydroxyläquivalentprozent, bezogen auf die Komponente a), mitverwendet. Insbesondere bei Verwendung von Gemischen aus Alkandiolen der genannten Art als Komponente b) können die Kettenverlängerungsmittel insgesamt in einer Menge von 100 bis 200 Hydroxyläquivalentprozent, bezogen auf die Komponente a), mitverwendet werden. Bei der Verwendung von nur einem Kettenverlängerungsmittel der beispielhaft genannten Art liegt die Menge der Komponente b) im allgemeinen bei maximal 100 Hydroxyläquivalentprozent, bezogen auf die Komponente a). Besonders bevorzugt ist die Verwendung der Komponente b) in einer Menge von 30 bis 70 Hydroxyläquivalentprozent, bezogen auf die Komponente a).

Bei der Komponente c) handelt es sich um organische Diisocyanate der an sich bkeannten Art, insbesondere um solche der Formel

Q(NCO)$_2$

in welcher

Q für einen aliphatischen Kohlenwasserstoffrest mit 4 bis 10, vorzugsweise 6 Kohlenstoffatomen, einen cycloaliphatischen Kohlenwasserstoffrest mit 5 bis 15 Kohlenstoffatomen, vorzugsweise 6 bis 13 Kohlenstoffatomen, einen aromatischen Kohlenwasserstoffrest mit 6 bis 15, vorzugsweise 7 bis 13 Kohlenstoffatomen oder einen araliphatischen Kohlenwasserstoffrest mit 8 Kohlenstoffatomen steht.

Beispiele geeigneter Diisocyanate sind 1,6-Diisocyanatohexan, 1,4-Diisocyanatocyclohexan, 1-Isocyanato-3-isocyanatomethyl-3,5,5-trimethyl-cyclohexan, 2,4- und gegebenenfalls 2,6-Diisocyanatotoluol, 4,4'-Diisocyanatodiphenylmethan im Gemisch mit bis zu 50 Mol-% 2,4'-Diisocyanatodiphenylmethan, 4,4'-Diisocyanatodiphenyl propan-2,2 bzw. beliebige Gemische derartiger Diisocyanate. Besonders bevorzugt wird als Komponente c) 4,4'-Diisocyanatodiphenylmethan und/oder 2,4-, 2,6-Toluylendiisocyanat und deren Gemische, vorzugsweise 4,4'-Diisocyanatodiphenylmethan mit bis zu 30 Mol-% 2,4'-und/oder 2,6-Toluoldiisocyanat eingesetzt.

Neben diesen Aufbaukomponenten a) bis c) können bei der Herstellung der erfindungsgemäßen Polyesterpolyurethane gegebenenfalls auch eine geringe Menge, d.h. bis zu 5 Äquivalentprozent, bezogen auf die Ausgangskomponenten a) bis c), an verzweigend wirkenden, höherfunktionellen Aufbaukomponenten, wie z.B. höherfunktionelle Alkohole, wie Trimethylolpropan oder höherfunktionellen Polyisocyanaten, mitverwendet werden, da eine geringe Verzweigung der erfindungsgemäßen Polyesterpolyurethane oft von Vorteil sein kann.

Die Herstellung der erfindungsgemäßen Polyesterpolyurethane erfolgt vorzugsweise im Eintopfverfahren, d.h. durch Umsetzung eines Gemisches der Komponenten a) und b) mit der Isocyanatkomponente c), wobei vorzugsweise in der Schmelze bei 50 bis 200, vorzugsweise 80 bis 150 °C, in einem NCO/OH-Molverhältnis von 0,9:1 bis 0,999:1 gearbeitet wird, so daß stets endständige Hydroxylgruppen aufweisende Verfahrensprodukte entstehen. Die Umsetzung kann selbstverständlich auch in Gegenwart von inerten Lösungsmitteln, wie z.B. Toluol, Methylethylketon, Essigsäureethylester oder Dimethylformamid bzw. in Gegenwart von Gemischen derartiger Lösungsmittel durchgeführt werden.

Die Herstellung kann jedoch auch nach dem Prepolymerprinzip erfolgen, wobei beispielsweise die Polyesterkomponente a) mit der Diisocyanatkomponente c) in einem über 1:1 liegenden NCO/OH-Molverhältnis bei 50 bis 150 °C zu einem NCO-Prepolymeren umgesetzt wird, welches anschließend mit dem Kettenverlängerungsreaktion in der Schmelze oder in Gegenwart von Lösungsmitteln gearbeitet werden. Selbstverständlich sind Varianten denkbar, beispielsweise dergestalt, daß bereits bei der Herstellung des NCO-Prepolymeren ein oder zwei der genannten Dioltypen b) mitverwendet werden, während dann die Kettenverlängerunsreaktion unter Verwendung der restlichen Dioltypen b) erfolgt, Die Reaktionen können diskontinuierlich in Rührkesseln oder Kontinuierlich in z.B. Reaktionsextrudern oder über Mischköpfe ausgeführt werden. Die Mitverwendung von Katalysatoren ist selbstverständlich nicht ausgeschlossen.

Die erfindungsgemäßen Produkte stellen wertvolle Klebstoffe bzw. Klebstoffrohstoffe zum Verkleben beliebiger Substrate, insbesondere aber zur Verklebung von Weich-PVC mit sich selbst oder anderen Materialien, dar. Zur erfindungsgemäßen Verwendung werden die erfindungsgemäßen Verfahrensprodukte in Form von Lösungen in geeigneten Lösungsmitteln, beispielsweise der oben bereits beispielhaft genannten Art oder aber als Schmelze, verarbeitet. Bevorzugt werden die erfindungsgemäßen Verfahrensprodukte in Form von 10 bis 40 gew.-%igen Lösungen in polaren Lösungsmitteln, beispielsweise Aceton oder Methylethylketon, verwendet. Die Viskosität dieser Klebstofflösungen kann durch Variation des Gehaltes an Hydroxylpolyurethane an speziellen Erfordernissen des Klebeverfahrens oder der zu verklebenden Materialien angepaßt werden. Die Herstellung der erfindungsgemäß zu verwendenden Lösungen der erfindungsgemäßen Hydroxylpolyurethan geschieht vorteilhaft durch einfaches Auflösen der Polyurethane in den zum Einsatz gelangenden polaren Lösungsmitteln bei Raumtemperatur bzw. bei mäßig erhöhter Temperatur. Falls die Herstellung der Hydroxylpolyurethane in Lösung erfolgte, kann das zur Herstellung eventuell verwendete unpolare Lösungsmittel entweder zunächst abgezogen werden, oder es kann auch dem System eine dem jeweiligen Verwendungszweck angepaßte Menge an polarem Lösungsmittel ohne vorheriges Abziehen des unpolaren Lösungsmittels zugegeben werden. Bei Verwendung von polaren Lösungsmitteln während der Herstellung der Polyurethane entstehen direkt verwendbare Lösungen.

Zur Erreichung spezieller Eigenschaften können den beschriebenen Klebstoffen natürliche oder synthetische Harze, wie z.B. Phenolharze, Ketonharze, Colophohiumderivate, Phthalatharze, Acetyl- oder Nitrocellulose oder andere Stoffe, wie z.B. Silikatfüllstoffe, zugefügt werden. Auch der Zusatz von Vernetzungsmitteln, beispielsweise von höherfunktionellen Polyisocyanaten, wie z.B. Phosphorsäure-tris-isocyanatophenylester, Tris-(idocyanatohexyl)-isocyanurat oder Tris-(isocyanatohexyl)-biuret, ist möglich, um extrem wärmefeste Klebungen zu erhalten.

Zur Verarbeitung werden Lösungen der vorliegenden Polyesterpolyurethane auf die gegebenenfalls gerauhten oder in anderer Weise vorbehandelten, zu verklebenden Werkstoffoberflächen gebracht. Dies kann mittels Walze, Pinsel, Spachtel, Spritzpistole oder einer anderen Vorrichtung gescheben. Die Klebstoffaufstriche werden zum weitgehenden Abdampfen der in ihnen enthaltenen Lösungsmittel gelagert und erlauben noch eine problemlose Verarbeitung selbst nach 30 bis 120 Minuten nach Klebstoffauftrag. Die Werkstoffe können anschließend mit Preßdruck gefügt werden. Es ist selbstverständlich möglich, auch alle übrigen in der Industrie üblichen Fügeverfahren anzuwenden.

Mit den erfindungsgemäßen Produkten können zahlreiche Werkstoffe, wie Papier, Pappe, Holz, Metall und Leder mit hoher Festigkeit verklebt werden. Bevorzugt eignen sie sich zum Kleben von beliebigen Kunststoffen mit sich selbst oder mit anderen Materialien, insbesondere zum Kleben von weichmacherhaltigen Homo- oder Mischpolymerisaten, das Vinylchlorid vor allem zum Kleben von Sohlen aus diesem Materialien auf Schuhschäfte aus Leder oder Syntheseleder. Auch als Haftvermittler beim Anspritzen von Sohlematerialien an den Schaft, z.B. PVC, können die Produkte eingesetzt werden.

Die erfindungsgemäßen Produkte eignen sich im übrigen auch hervorragend als Beschichtungsmittel für die verschiedensten Substrate und Kompoundierungsmittel für andere Polymere.

Die nachstehenden Beispiele dienen der weiteren Erläuterung der Erfindung.

## Beispiel

### Herstellung der Polyesterpolyurethane 1-9

Die in der nachstehenden Tabelle aufgelisteten Polyesterdiole (Spalte 1) und Diole (Spalte 2) werden gemischt und während einer Stunde im Wasserstrahlvakuum bei 100° C entwässert.

Aschließend erfolgt bei 120° C die Zugabe der Polyisocyanate (Spalte 3). Mit Zunehmen der Viskosität der Schmelze werden bis zu 60 Gew.-% Toluol zugetropft und die Temperatur für 6 Stunden zwischen 110 und 120° C gehalten. Anschließend wird das Toluol abgezogen und das Produkt noch weitere 8 Stunden bei 110° C getempert.

Die Produkte weisen, 15 %ig in Methylethylketon gelöst, eine Viskosität von 1.000 bis 1.400 MPas bei 23° C auf.

### Herstellung ds Polyesterpolyurethans 10

Die in der nachstehenden Tabelle aufgelisteten Polyesterdiole (Spalte 1) und Diole (Spalte 2) werden gemischt und während 1 Stunde im Wasserstrahlvakuum bei 100° C entwässert.

Anschließend erfolgt bei 120° C die Zugabe der Polyisocanate (Spalte 3). Das Reaktionsgemisch wird ca. 2 Min. gerührt, wobei die Temperatur bis auf 140° C ansteigen kann. Die heiße Schmelze wird in TEFLON®-Schalen gegossen und anschließend bei 110° C während 15 h ausgeheizt.

Die Produkte weisen, 15 %ig in Methylethylketon gelöst, eine Viskosität von 1000 bis 1400 mPas bei 23° C auf.

## Herstellung der Klebungen zur Ermittlung der Anfangsfestigkeit

Als Material wird ein 4 mm dickes PVC-Material aus 70 Gew.-Teilen Polyvinylchlorid (K-Wert 80), 30 Gew.-Teilen Dioctylphthalat als Weichmacher sowie 5 Gew.-Teilen epoxidiertes Sojabohnenöl und 1,2 Gew.-Teilen Barium-Cadmium-Laurat verwendet.

Vor dem Aufbringen der Klebstoffe (20 gew.-%ige Lösungen in Methylethylketon) werden die zu klebenden Oberflächen des auf Streifen von 15 cm Länge und 3 cm Breite geschnittenen Werkstoffes mit Schleifband der Körnung 40 gründlich geraucht und vom Schleifstaub befreit. Die Materialien werden nach dem Klebstoffauftrag 60 Minuten bei Raumtemperatur offen gelagert und dann gefügt und gepreßt (10 sec., 3,5 kp/cm²). Nach dem Pressen werden die Proben innerhalb von 1 Minute in eine Zugprüfmaschine eingespannt. Dann werden die beiden Enden mit einer Abzugsgeschwindigkeit von 100 mm/Minute auseinandergezogen. Die ermittelten Ergebnisse für die Anfangsfestigkeit werden in der Tabelle, Spalte 5, wiedergegeben.

## Herstellung der Klebungen zur Ermittlung der Wärmefestigkeit

Zwei Streifen PVC, 6 cm lang und 2 cm breit, des gleichen Materials wie bei der Ermittlung der Anfangsfestigkeit, werden nach Rauhung mit Schleifband der Körnung 40 mit Klebstoff versehen, 60 Minuten offen bei Raumtemperatur gelagert, dann mit einer Überlappung von 20 mm gefügt und 10 Sekunden bei 3,5 kp/cm² gepreßt. Die Klebfläche beträgt 4 cm². Nach 10 Tagen Lagerung bei Raumtemperatur werden die Klebungen in einen auf 40° C vorgeheizten automatischen Wärmeschrank mit einer Belastung von 4 kp eingehängt. Nach 20 Minuten wird die Temperatur jeweils innerhalb von 20 Minuten um 10° C gesteigert. Es wird die Temperatur ermittelt, bei der die Trennung der Scherklebung erfolgt. Die ermittelten Ergebnisse werden in der Tabelle, Spalte 6, wiedergegeben.

## Legende

### Polyester

A    Hydroxylpolyester aus Adipinsäure und einer Mischung aus Butandiol-1,4 und Hexandiol-1,6 im molaren Verhältnis 7:3 (MG 2.000; Säurezahl 0,9).

B    Hydroxylpolyester aus Adipinsäure und einer Mischung aus Butandiol-1,4 und Hexandiol-1,6 im molaren Verhältnis 1:1 (MG 2.000; Säurezahl 1,1).

C    Hydroxylpolyester aus Adipinsäure und Butandiol-1,4 (MG 2.250; Säurezahl 0,9).

D    Hydroxylpolyester aus Adipinsäure und Hexandiol-1,6 (MG 2.250; Säurezahl 0,8).

E    Hydroxylpolyester aus Adipinsäure und einer Mischung von Butandiol-1,4 und Hexandiol-1,6 im molaren Verhältnis 7:3 (MG 5.000; Säurezahl 1,1) gemäß Beispiel I der EP-A-192 946.

### Glykol

M    Butandiol-1,4

N    Hexandiol-1,6

### Diisocyanate

X    4,4'-Diisocyanatodiphenylmethan

Z    Gemisch von 65 % 2,4- und 35 % 2,6-Toluylendiisocyanat.

Tabelle

| Bei-spiel | Polyester a | Glykol b | Diisocyanat c | Kontaktkleb-zeit bei RT Minuten | Anfangsfestig-keit [N/mm] | Wärmefestig-keit |
|---|---|---|---|---|---|---|
| 1 | 1 Mol A | – | 0,995 Mol X | >60 | 1,9 | <50° C |
| 2 | 1 Mol B | – | 0,995 Mol Z | >60 | 1,7 | <50° C |
| 3 | 1 Mol A | 0,45 Mol M 0,45 Mol N | 1,89 Mol X | >60 | 3,9 | 78° C |
| 4 | 1 Mol A | 0,45 Mol M 0,45 Mol N | 1,8 Mol X 0,09 Mol Z | >60 | 3,7 | 77° C |
| 5 | 1 Mol B | 0,45 Mol M 0,45 Mol N | 1,89 Mol X | >60 | 4,1 | 80° C |
| 6 | 1 Mol C | – | 0,995 Mol Z | <60 | * | |
| 7 | 1 Mol D | – | 0,995 Mol Z | <60 | * | |
| 8 | 1 Mol D | 0,4 Mol N 0,4 Mol N | 1,79 Mol X | <60 | * | |
| 9 | 1 Mol E | 0,5 Mol M 0,5 Mol N | 1,99 Mol X | <60 | * | |
| 10 | 1 Mol B | 0,45 Mol N 0,45 Mol N | 1,89 Mol X | >60 | 3,6 | 76° C |

Die Proben 3-5 und 10 sind erfindungsgemäße Proben, die übrigen Proben Vergleichsbeispiele.

Da die Kontaktklebzeit in Beispiel 6 bis 9 geringer als 60 Minuten ist, konnten diese Proben nicht mehr zusammengefügt werden.

EP 0 295 422 A2

## Ansprüche

1. Endständige Hydroxylgruppen aufweisende Polyesterpolyurethane, erhältlich durch Umsetzung von

a) Polyesterdiolen eines zwischen 1.000 und 3.900 liegenden Molekulargewichtes,

b) mindestens einem Glykol des Molekulargewichtes 62 bis 600 als Kettenverlängerungsmittel und

c) mindestens einem organischen Diisocyanat.

unter Einhaltung eines Äquivalent-Verhältnisses von Hydroxylgruppen in a) und b) zu Isocyanatgruppen in c) von 1:0,9 bei 1:0,999, dadurch gekennzeichnet, daß die Komponente a) zu mindestens 80 Gew.-% aus Polyesterdiolen auf Basis von

i) Dicarbonsäuren mit mindestens 6 C-Atomen und mindestens zwei unterschiedlichen Diolen des Molekulargewichtsbereiches 62 bis 600, wobei der Anteil jeder Diolkomponente nicht weniger als 20 Mol-% des Gemisches betragen soll und/oder

ii) Mischkondensationsprodukten von

p) Dicarbonsäuren mit mindestens 6 C-Atomen und mindestens einem Diol des Molekulargewichtsbereiches 62 bis 600 und

q) Hydroxycarbonsäuren bzw. den daraus abgeleiteten Lactonen, mit mindestens 6 C-Atomen, wobei das molare Verhältnis der Komponenten p zu q zwischen 3:1 und 1:3 liegen soll, besteht.

2. Polyesterpolyurethane gemäß Anspruch 1, dadurch gekennzeichnet, daß sie weitgehend linear sind.

3. Polyesterpolyurethane gemäß wenigstens einem der vorhergehenden Ansprüche, dadurch gekennzeichnet, daß die Komponente a) zu 100 % aus einem Polyesterdiol des mittleren Molekulargewichtes 1.500 bis 3.000 auf Basis von Adipinsäure und einem Diolgemisch aus Butandiol-1,4 und Hexandiol-1,6 im molaren Verhältnis 3:7 bis 7:3 besteht.

4. Polyesterpolyurethane gemäß wenigstens einem der vorhergehenden Ansprüche, dadurch gekennzeichnet, daß das Polyesterdiol des mittleren Molekulargewichtes 1.500 bis 3.500 a) zu 100 % aus einem Mischkondensationsprodukt von

p) Adipinsäure und Butandiol-1,4 und/oder Hexandiol-1,6 und

q) -Hydroxycapronsäure bzw.
-Caprolacton

im Verhältnis p:q von 7:3 bis 3:7 besteht.

5. Polyesterpolyurethane gemäß wenigstens einem der vorhergehenden Ansprüche, dadurch gekennzeichnet, daß als Komponente b) in einer Menge von 70 bis 150 Hydroxyläquivalent-%, bezogen auf a) eine Mischung von Butandiol-1,4 und Hexandiol-1,6 im molaren Verhältnis 7:3 bis 3:7 verwendet wird.

6. Polyesterpolyurethane gemäß wenigstens einem der vorhergehenden Ansprüche, dadurch gekennzeichnet, daß als Diisocyanat c) 4,4'-Diisocyanatodiphenylmethan mit bis zu 30 Mol-% 2,4- bzw. 2,6-Toluylendiisocyanat bzw. deren Gemische verwendet wird.

7. Verwendung eines Polyesterpolyurethans gemäß wenigstens einem der vorhergehenden Ansprüche als Klebstoff oder zur Herstellung von Klebstoffen.

8. Werkstoffverbunde, die mit einem Kleber zusammengefügt sind, dadurch gekennzeichnet, daß als Kleber ein Kleber gemäß wenigstens einem der vorhergehenden Ansprüche verwendet worden ist.